# EUROPEAN PATENT APPLICATION

(11) **EP 0 737 717 A2**
(43) Date of publication of application: **16.10.1996**
(21) Application number: 96301459.2
(22) Date of filing: 05.03.1996
(51) Int. Cl.: C08L 71/12

(54) **Heat resistant polyphenylene ether copolymer compositions**

(30) Priority: 17.03.1995 US 405670
(71) Applicant: GENERAL ELECTRIC COMPANY, Schenectady, NY 12345 (US)
(72) Inventor: Campbell, John R., Clifton Park, New York 12065 (US); Scobbo, James Joseph Jr., Slingerlands, New York 12159 (US); Wroczynski, Ronald J., Schenectady, New York 12303 (US); Brown, Sterling B., Schenectady, New York 12309 (US)
(74) Representative: Szary, Anne Catherine

(57) **Abstract**

Heat resistant compositions comprising polymer systems and functionalized high glass transition temperature polyphenylene ether copolymers are disclosed. The heat resistant compositions unexpectedly display improved heat deflection temperatures and retain high impact strengths.

## Description

### Field of the Invention

This invention relates to new compositions of matter and more particularly to heat resistant compositions comprising functionalized high glass transition temperature polyphenylene ether copolymers. The resulting heat resistant compositions unexpectedly exhibit improved heat deflection temperature (HDT) while retaining among other things, solvent resistant properties and high impact strengths.

### Background of the Invention

Polyethers and/or polymer blends which contain polyphenylene ethers (PPE) constitute an invaluable class of engineering thermoplastic resins. Resins of polyphenylene ethers are characterized by a unique combination of chemical, physical and electrical properties. For instance, they are resistant to many solvents and generally display high impact strengths. As a result of this unique combination of properties, resins of polyphenylene ethers are suitable for a broad range of commercial applications.

It has been of increasing interest to prepare polymer blends which, while retaining their characteristic hydrolytic stability, dimensional stability and dielectric properties, have higher heat deflection temperatures. Particularly, there is a demand for immiscible blends, like PPE/polyamide blends, which possess increased heat deflection properties since they are, for instance, conventionally used in parts exposed to high temperatures in the automotive industry.

The instant invention, therefore, is directed to novel heat resistant compositions comprising functionalized high glass transition temperature polyphenylene ether based copolymers and the novel compositions unexpectedly display improved heat deflection temperatures.

### Description of the Prior Art

Efforts have been disclosed for preparing polyphenylene ether compositions. In U.S. Patents 4,011,200, 4,654,405, 4,798,865 and 4,923,924, polyphenylene ether resin compositions are described and the resins contain copolymers of 2,6-dimethylphenol and 2,3,6-trimethylphenol.

Still other investigators have focused their attention on polyphenylene ether compositions. In U.S. Patent 4,826,933, polyphenylene ether blends are described which contain compatibilizing agents.

The instant invention is patentably distinguishable from the above-described, since among other reasons, it is directed to heat resistant compositions comprising functionalized high glass transition temperature polyphenylene ether copolymers incorporated therein.

### Summary of the Invention

The novel heat resistant compositions in this invention comprise:
(a) electrophilic functionalized high glass transition temperature copolymers having structural units of the formulae: 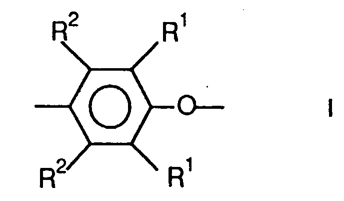 and 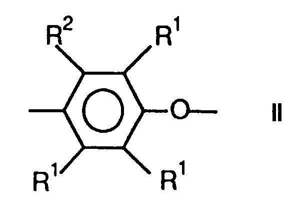 and on each of the structural units independently, each R¹ is independently a halogen, primary, secondary or tertiary alkyl, phenyl, haloalkyl, aminoalkyl, hydrocarbonoxy or halohydrocarbonoxy wherein at least two carbon atoms separate the halogen and oxygen atom. Often, R¹ is an alkyl group and preferably a methyl group. Each R² is independently a hydrogen, halogen, primary, secondary or tertiary alkyl, phenyl, haloalkyl, hydrocarbonoxy or halohydrocarbonoxy as defined for R¹ and preferably hydrogen; and
(b) a polymer system selected from the group consisting of immiscible polymer blends, miscible polymer blends, copolymers and thermoplastic polymers.

### Detailed Description of the Preferred Embodiments

The electrophilic functionalized high glass transition temperature copolymers employed in this invention may be epoxy end group functionalized and/or epoxy graft functionalized and they can comprise any epoxy functionalized moiety known in the art. When the electrophilic functionalized high glass transition temperature copolymers are epoxy end group functionalized, they often comprise end groups of the formulae: 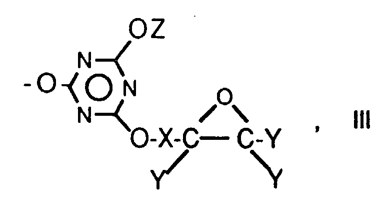 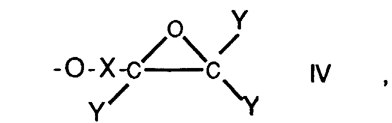 or 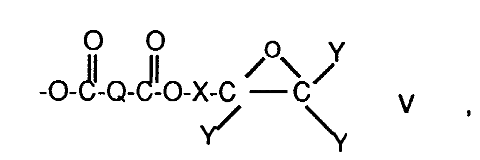 wherein X is a divalent aliphatic, alicyclic, heterocyclic or unsubstituted or substituted aromatic hydrocarbon radical, alkylcycloaliphatic, alkylaryl, alkylcarbonyloxv or alkvlarvlcarbonoxv radical and preferably 〉CH₂ and each Y is independently a hydrogen or alkyl group and preferably hydrogen and Z is an alkyl, cycloalkyl, aromatic radical or 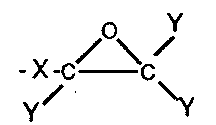 and Q is a divalent C₁₋₁₀ hydrocarbon, an aliphatic or aromatic radical and preferably an aryl radical.

When the electrophilic functionalization is epoxy graft functionalization, the functionalized moiety often has a structural unit of the formula: 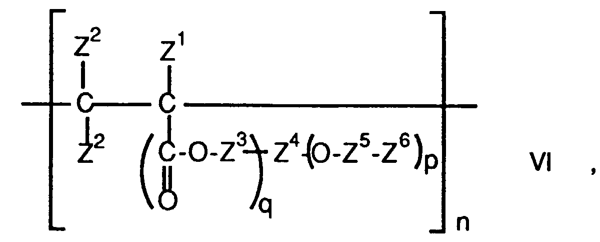 wherein:
Z¹ is a hydrogen or alkyl group;
Z² is a hydrogen, a C₁₋₅ alkyl group or substantially inert substituent;
Z³ is a C₁₋₅ alkyl group;
Z⁴ is an epoxy group when q is 1 and p is 0 or a carbonyl group or C₁₋₅ alkyl group when q is 0 and p is 1;
Z⁵ is a C₁₋₅ alkyl group;
Z⁶ is an epoxy group and n is from about 1 to about 25 and preferably from about 1 to about 10; and
p is 0 or 1 and q is 0 or 1 with the proviso that p and q are not equal.

The electrophilic functionalized high glass transition temperature copolymers employed in this invention can also include orthoester end group and graft functionalization. When orthoester functionalized, the copolymers may comprise groups of the formula: 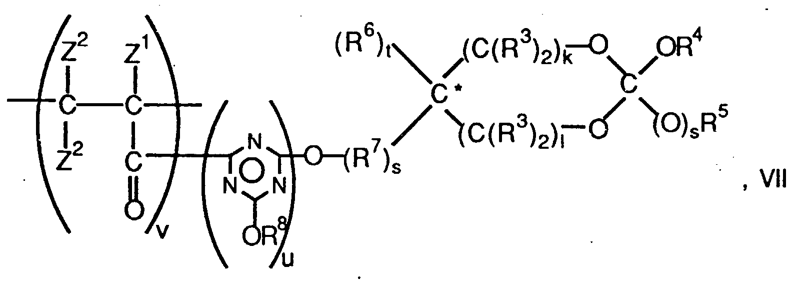 wherein each R³ is independently a hydrogen, C₁₋₅ hydrocarbon, substituted or unsubstituted aromatic radical or a halogen and R⁴ is a C₁₋₁₀ primary or secondary alkyl or aralkyl or a C₆₋₁₀ aromatic radical or an alkylene radical forming a second 4 to 8 membered ring with C* thus producing a bicyclo compound. R⁵ is a C₁₋₁₀ primary or secondary alkyl or aralkyl or a C₆₋₁₀ aromatic radical. Further, R⁴ and R⁵ taken together with atoms connecting them can form a 4 to 8 membered ring thus producing a spirobicyclo compound. R⁶ is a hydrogen, alkyl or aryl and R⁷ is a C₁₋₆ alkylene radical. R⁸ is an alkyl, cycloalkyl or aromatic radical. k is an integer from 0 to 2 and I is an integer from 0 to 1. s is 0 or 1 and t is 0 when R⁴ and C* form a bicyclo compound and is otherwise 1. u is 0 or 1 and v is 0 to about 25 with the proviso that the copolymers are end group functionalized when u is 0 or 1 and v is 0, and the copolymers are graft functionalized when u is 0 and v is 1 to about 25 and u and v cannot simultaneously be greater than 0. Additionally, s, k and I cannot simultaneously be 0.

It is also within the scope of the instant invention to functionalize the high glass transition temperature copolymers with alkyltriazine end groups. When alkyltriazine end group functionalized, the copolymers may comprise end groups of the formula 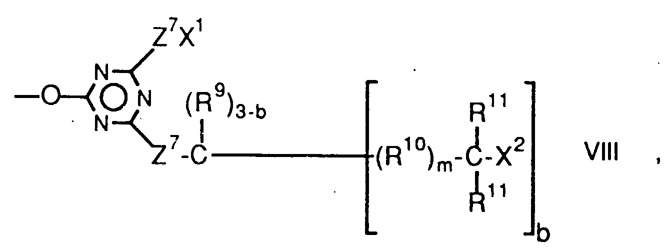 wherein:
X¹ is an alkyl, cycloalkyl or aromatic radical or 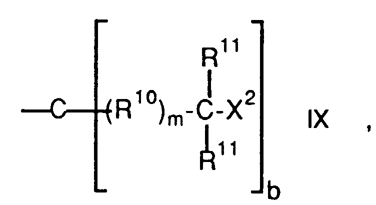
X² is a group displaceable by nucleophilic aliphatic substitution;
each Z⁷ is independently oxygen or sulfur;
R⁹ is hydrogen, C₁₋₄ primary or secondary alkyl or a non-hydrocarbon substituent substantially inert to displacement by nucleophilic moieties;
R¹⁰ is a C₁₋₃ alkylene radical which is unsubstituted or is substituted with moieties selected from the group consisting of C₁₋₄ primary or secondary alkyl radicals and non-hydrocarbon substituents as defined for R⁹;
each R¹¹ is independently R⁹ or X²;
m is 0 or 1 ; and
b is 1-3.

Moreover, X² is often chlorine, bromine, iodine, alkylsulfonate, arylsulfonate, carboxylate, phosphate, phosphonate, phosphinate, thiophosphate, thiophosphonate and thiophosphinate groups. The preferred values for X² include chlorine, bromine and 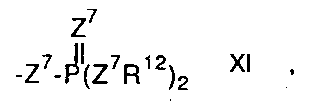 wherein Z⁷ is as previously defined and each R¹² is independently a C₁₋₃₀ primary or secondary alkyl, cycloalkyl, aromatic or alkaryl radical or both of the R¹² radicals together with the atoms connecting them form a cyclic structure.

The electrophilic functionalized high glass transition temperature copolymers employed in this invention include block or random copolymers containing I in combination with II. Random copolymers are most preferred whereby the distribution of I to II in the copolymer is about 80 to 20% by weight of the former to about 20 to 80% by weight of the latter including all ranges subsumed therein.

The electrophilic functionalized high glass transition temperature copolymers employed in this invention may be prepared for instance, by first oxidative coupling monohydroxyaromatic compounds such as 2,6-dimethylphenol and 2,3,6-trimethylphenol to produce polyphenylene ether copolymers. Catalyst systems are generally employed in the production of the copolymers and there is essentially no limitation with respect to the catalyst system employed. In fact, any conventional oxidative coupling catalyst known in the art may be employed and they often include those having a metal and amine portions. Illustrative examples of such catalysts include those containing a copper compound and described in U.S. Patents 3,306,874, 3,306,875, 3,914,266 and 4,028,341, the disclosures of which are incorporated herein by reference. The catalysts containing copper compounds are usually combinations of cuprous or cupric ions, halide and at least one amine. Often preferred copper containing catalysts include CuBr/dibutylamine, CuBr/N,N'-di-tert-butyl-1,2-ethylenediamine and CuBr/N,N-dimethylbutylamine as well as mixtures prepared therefrom.

Additional catalyst systems that may be employed in this invention include those containing manganese compounds. They are generally alkaline systems in which divalent manganese is combined with such anions as halide, alkoxide or phenoxide. Most often, the manganese is present as a complex with one or more complexing and/or chelating agents such as dialkylamines, alkanolamines, alkenediamines, o-hydroxyaromatic aldehydes, o-hydroxyazo compounds and ω-hydroxyoximes.

Detailed descriptions for the production of polyphenylene ethers are set forth in U.S. Patents 3,306,874; 3,306,875; 3,257,357; 3,257,358; 3,337,501 and 3,787,361, the disclosures of which are all incorporated herein by reference.

Subsequent to polyphenylene ether copolymer production, the copolymer may be epoxy end group functionalized by, for instance, contacting under reactive conditions in the presence of a basic reagent, at least one polyphenylene ether with epoxy compounds which are the precursors for the end groups represented by formulae III, IV and V. Such epoxy compounds are described in U.S. Patent 4,895,945, the disclosure of which is incorporated herein by reference, and they include, for example, 2-chloro-4,6-diglycidoxy-1,3,5-triazine (hereinafter "DGCC"), 2-chloro-4-methoxy-6-glycidoxyl,3,5-triazine, 2-chloro-4-(n-butoxy)-6-glycidoxy-1,3,5-triazine (hereinafter "BGCC") and 2-chloro-4-(2,4,6-trimethylphenoxy)-6-glycidoxy-1,3,5-triazine (hereinafter "MGCC"). These compounds may also be named as though derived from cyanuric acid, and DGCC, BGCC and MGCC may be designated diglycidyl chlorocyanurate, n-butyl glycidyl chlorocyanurate and 2,4,6-trimethylphenyl glycidyl chlorocyanurate, respectively. Other epoxy compounds which may be employed include epichlorohydrin, chloro-3-epoxybutane and glycidyl (4-chlorocarbonyl) benzoate.

Reactive conditions as used herein can mean reacting the polyphenylene ether copolymers with precursor epoxy compounds in solution in a non-polar organic liquid, typically at a temperature of about 40-150°C. The basic reagent employed is generally a tertiary amine or inorganic base such as sodium hydroxide. A more detailed description of such a process is described in U.S. Patents 5,096,979 and 5,115,043, the disclosures of which are incorporated herein by reference.

When the electrophilic functionalized high glass transition temperature copolymers employed in this invention are epoxy graft functionalized, they may be prepared, for instance, by reacting the polyphenylene ether copolymers with olefinic epoxy compounds such as glycidyl methacrylate, glycidyl acrylate and glycidyl ethacrylate which are the precursors for the structural unit represented by formula VI. Additionally, olefinic epoxy compounds such as diglycidyl maleate, diglycidyl fumarate, glycidyl alkylmaleate and glycidyl alkylfumarate may also be employed. Such graft functionalized copolymers are often prepared by, for example, adding olefinic epoxy compounds and an appropriate radical initiator such as dicumyl peroxide to solutions of polyphenylene ether copolymers in a non-polar solvent such as chlorobenzene. The resulting solution is heated to reflux under nitrogen, with stirring, and the graft functionalized copolymers are recovered via precipitation with methanol. A more detailed description of such preparation may be found in U.S. Patent 4,994,525, the disclosure of which is incorporated herein by reference. Moreover, other methods for graft functionalizing copolymers include the steps of contacting polyphenylene ether copolymer with olefinic epoxy compounds in an extruder in the presence of a radical initiator and a lubricant. Such methods are described in U.S. Patent 5,214,099, the disclosure of which is incorporated herein by reference.

Orthoester end group functionalized copolymers are often prepared by reacting polyphenylene ether copolymers with, for instance, a reactive compound containing an orthoester group and preferably a 4-(2-methoxy-2-methyl-1,3-dioxolane-4-yl) methyl group. A detailed description for such preparation may be found in U.S. Patent 5,162,448, the disclosure of which is incorporated herein by reference.

Orthoester graft functionalized copolymers may be prepared by reacting ethylenically unsaturated cyclic orthoesters, such as those described in U.S. Patent 5,171,866, the disclosure of which is incorporated herein by reference, with the polyphenylene ether copolymers in the presence of a radical initiator and a non-polar solvent.

Alkyltriazine end group functionalized high glass transition temperature copolymers are often prepared by reacting polyphenylene ether copolymers with a halogenated triazine. A detailed description for such preparation may be found in U.S. Patent 5,210,191, the disclosure of which is incorporated herein by reference.

There is no limitation with respect to the immiscible polymer blends, miscible polymer blends, copolymers or thermoplastic polymers (hereinafter all referred to as polymer systems) employed in this instant invention other than that they are able to form heat resistant compositions with the functionalized high glass transition temperature polyphenylene ether copolymers described above. Illustrative examples of the polymer systems that may be employed in this invention include any of those, for instance, which comprise polyphenylene ethers in combination with polyolefins, polyamides, polyarylene sulfides, polyesters, acrylonitrile butadiene styrene copolymers, polystyrenes or polyetherimides. The preferred thermoplastic polymers employed in this invention include homopolymers of polyphenylene sulfide, polyolefins, polyamides, polyesters as well as unfunctionalized polyphenylene ether homopolymers, unfunctionalized polyphenylene ether copolymers and functionalized polyphenylene ether homopolymers.

It is noted herein that any of the polymers employed in this invention, which are used to form the immiscible blends, miscible blends or copolymers, may be unfunctionalized or functionalized in the typical ways known in the art. Such functionalization is not limited and can include, for instance, functionalization with citric acid, maleic anhydride, fumaric acid, epoxides, trimellitic acid chloride anhydride, α- or β-unsaturated amides or lactams and the like provided that a heat resistant composition can be formed.

The polyphenylene ether portion of the polymer systems that may be employed in this invention often include both homopolymer and copolymer polyphenylene ethers. Suitable homopolymers are those which contain, for example, 2,6-dimethyl-1,4-phenylene ether units. Suitable copolymers include, for instance, graft, block or random copolymers containing such units in combination with 2,3,6-trimethyl-1,4-phenylene ether units. Such a portion is typically prepared by oxidative coupling at least one corresponding monohydroxyaromatic compound. Moreover, any of the conventional polyphenylene impact modifiers/additives may be employed in this invention. They include, for example, rubbery interpolymers of ethylene and α-olefins, AB (diblock) and ABA (triblock) copolymers and core-shell graft copolymers of alkenylaromatic and diene compounds, especially those comprising styrene and butadiene or isoprene blocks. Additionally, suitable lubricants such as hydrogenated poly(α-olefins) may be employed as well as talc additives and functionalized elastomers.

It is often preferred that the above-described polyphenylene ether portion of the polymer systems is combined with a base polymer consisting essentially of structural units derived from olefinically unsaturated monomers including ethylene, propylene, isobutene, styrene, butadiene, isoprene, chloroprene, vinylchloride, vinylidiene chloride or combinations thereof.

The polymer systems comprising polyphenylene ethers and polyolefins may be prepared, for instance, by first reacting functionalized polyphenylene ether and polyolefins to form polyphenylene ether-polyolefin copolymers which in turn are useful as compatibilizers for polymer blends of the same. A more detailed description of such may be found in Re 34,799, the disclosure of which is incorporated herein by reference.

Other preferred polymer systems that may be employed in this invention include those comprising polyphenylene ethers and polyamides. They may be produced by any conventional method satisfactorily employed in the art. Generally, however, melt blending methods are desired. A more detailed and typical description of the production of polyphenylene ether/polyamide polymer systems that may be employed in this invention is described in U.S. Patent 4,826,933, the disclosure of which is incorporated herein by reference. Additionally, it is noted herein that polyamides are intended to include toughened or super tough polyamides such as those prepared in accordance with, for instance, U.S. Patents 4,174,358, 4,474,927, 4,346,194 and 4,251,644, herein incorporated by reference. Typical polyamides employed include polyamides 4/6, 6, 6/6, 11, 12, 6/3, 6/4, 6/10, 6/12 and nylon compounds comprising aromatic groups derived from terephthalates and isophthalates.

Still other preferred polymer systems which may be employed in this invention include those comprising polyphenylene ether and polyesters. Such polymer systems are typically prepared by melt blending polyphenylene ethers with polyesters such as poly(ethylene terephthalate), poly(butylene terephthalate), liquid crystalline polyesters, poly(butylene naphthalenedicarboxylate) and poly(ethylene naphthalenedicarboxylate). A typical process for such is described in detail in U.S. Patent 5,281,667, the disclosure of which is incorporated herein by reference.

Additional preferred polymer systems which may be employed in this invention include those which comprise polyphenylene ethers and polyarylene sulfides such as polyphenylene sulfide. Such polymer systems are prepared, for instance, by the reaction of epoxy functionalized polyphenylene ether compositions with polyphenylene sulfide containing epoxide-reactive functional groups. A detailed description of such preparation may be found in U.S. Patent 5,122,578, the disclosure of which is incorporated herein by reference.

Furthermore, there is no limitation with respect to the thermoplastic polymers employed in this invention other than that they can produce a heat resistant composition with the functionalized high glass transition temperature polyphenylene ether copolymers described in this invention. Often, the preferred thermoplastic polymers include polyesters such as poly(ethylene terephthalate) and poly(butylene terephthalate) and polyarylene sulfides such as polyphenylene sulfide.

The functionalized high glass transition temperature copolymers employed in heat resistant compositions of this invention typically have an average molecular weight (Mw) of about 500 to about 100,000 including all ranges subsumed therein. The preferred range is from about 1,000 to about 80,000 and the most preferred range is from about 10,000 to about 60,000.

Additionally, the instant heat resistant compositions are often about 5 to about 75 weight percent functionalized high glass transition temperature copolymer as represented by (a) and preferably about 10 to about 60 weight percent functionalized high glass transition temperature copolymer and most preferably from about 35 to about 50 weight percent functionalized high glass transition temperature copolymer based on total weight of the heat resistant composition, as well as all ranges subsumed therein.

The functionalized high glass transition temperature copolymers employed in this invention are often about 0.1 to about 10.0 and preferably about 0.5 to about 5.0 and most preferably from about 1.0 to about 2.0 weight percent epoxide based on total weight of the functionalized copolymer, and weight percent epoxide is defined as the weight percent of glycidoxy units based on total weight of functionalized copolymer.

High glass transition temperature is defined herein to mean a glass transition temperature from about 170°C to about 265°C and preferably a temperature greater than about 210°C.

It is noted herein that mixtures of functionalized high glass transition temperature copolymers having glass transition temperatures from about 170°C to about 265°C may also be employed in this invention.

Unexpected improved heat deflection temperatures are defined herein to mean an increase in HDT of the composition of at !east about 5°C and preferably at least about 10°C when compared to the base immiscible polymer blends, miscible polymer blend or copolymers free of said functionalized high glass transition temperature copolymers.

Moreover, the heat resistant compositions described in this invention may be prepared, for instance, by extruding the functionalized high glass transition temperature copolymers and one of the polymer systems described above in, for instance, a twin screw extruder operating at barrel temperatures from about 145°C to about 340°C.

The following examples are provided in order to further illustrate and facilitate the understanding of the instant invention. All products may be confirmed via conventional techniques including proton and carbon-13 nuclear magnetic resonance spectroscopy, infrared spectroscopy and GLC analysis.

### Example 1

A 5 liter flask equipped with condenser plus nitrogen tee, thermometer, stirrer, oxygen dip tube and addition funnel was charged with toluene (1750 ml), a 2,6-xylenol solution made from 112 mL toluene and 52.5 g xylenol, methyltrialkyl (C₈-C₁₀) ammonium chloride (10% solution in toluene w/v, 5.25 mL), di-t-butylethylene diamine (1.15 g), dimethylbutylamine (20.0 g), dibutylamine (5.4 g) and a solution of cuprous oxide in hydrobromic acid (10% w/v, 6.3 g). Oxygen was passed through the vigorously stirred reaction at approximately 3 standard cubic foot per hour while the remainder of the monomer solution (xylenol solution which contained 473 g xylenol and 545 g toluene and 2,3,6-trimethylphenol 168 g plus toluene 350 mL) was added in 40 minutes while maintaining the temperature at 25°C via ice cooling. The polymerization temperature was allowed to increase to 35-40°C and the reaction continued for an additional 75 minutes resulting in a high glass transition temperature polyphenylene ether copolymer solution.

### Example 2

To a solution of 300 grams of polyphenylene ether copolymer in 2700 mL of toluene (as prepared in Example 1) were added 5.0 mole percent DGCC dissolved in a small amount of methylene chloride. There were then added 29.1 grams of a 10% solution in toluene of a commercially available methyltrialkylammonium chloride in which the alkyl groups contained 8-10 carbon atoms, and 1.41 g of 50% aqueous sodium hydroxide to produce a mixture. The mixture was stirred vigorously for various periods at 25° to 40°C, after which functionalized high glass transition temperature polyphenylene ether copolymers were produced. The functionalized copolymer was precipitated with methanol in a blender and rapidly filtered, washed with methanol and vacuum dried.

### Example 3

A heat resistant composition was prepared by mixing dry blends of polyphenylene ether (245 g) (prepared from 2,6-xylenol monomer), KG 1651 Rubber (styrene-butadiene-styrene triblock copolymers as defined by Shell Corp.) (100 g) and functionalized high glass transition temperature copolymer as prepared in Example 2 (245 g). The resulting mixture was extruded on a twin screw extruder operating at barrel set temperatures of 293°C (die), 293°C, 293°C, 260°C, 232°C and 149°C with a screw speed of 400 rpm. The dry blends were fed at a rate of approximately 50 g/min and subsequently reformulated with polyamide 6/6 (0.695 g/g of extrudate). Extrusion of the mixture resulted in a heat resistant composition.

### Example 4

A heat resistant composition was prepared by mixing a dry blend of functionalized polyphenylene ether (160 g) (as prepared in Example 2), KD1102 rubber (styrene-ethylenebutylene-styrene triblock copolymers as defined by Shell Corp.) (40 g), polyethylene terephthalate (200 g), octadecyl 3-(3',5'-di-tert-butyl-4'-hydroxyphenyl)proprionate (1.2 g), polytetrafluoroethylene (1.0 g), talc (1.0 g) and hydrogenated poly(a-olefin) lubricant (kinematic viscosity about 2-20 centistokes at 100°C) (2.0 g). The resulting mixture was extruded on a twin screw extruder operating at barrel set temperatures of about 293°C (die), 293°C, 293°C, 260°C, 232°C and 149°C with a screw speed of 400 rpm. Extrusion of the mixture resulted in a heat resistant composition.

### Example 5

A heat resistant composition was prepared by mixing a dry blend of functionalized polyphenylene ether (162.5 g) (as prepared in Example 2), polyphenylene sulfide (275 g), and elastomer (37.5 g) (copolymer of α-olefin with a glycidyl ester of an α,β-unsaturated carboxylic acid). The resulting mixture was extruded in a manner similar to the one described in Example 4 and extrusion of the mixture resulted in a heat resistant composition.

The data in the table below is provided to demonstrate the unexpected superior properties obtained in the instant invention. All entries have been prepared in a manner similar to those described in the examples provided above.

**TABLE**

| Entry | Polymer System^{a} | Functionalized Copolymer | N. Izod^{c} | ΔHDT^{d} |
|---|---|---|---|---|
| 1 | PPE/PPS | No | 14.7 | --- |
| 2 | PPS | Yes^{b} | 4.9 | 10°C |
| 3 | PPE/PET | No | 17.4 | --- |
| 4 | PET | Yes^{b} | 11.4 | 8°C |

| | | | | |
|---|---|---|---|---|
| ^{a}PPE = polyphenylene ether, PPS = polyphenylene sulfide, PET = polyethylene terephthalate | | | | |
| ^{b}35 weight percent based on total weight of the heat resistant composition | | | | |
| ^{c}Kg-cm/cm | | | | |
| ^{d}Increase in heat deflection temperature (°C) compared to polymer system free of functionalized copolymer | | | | |

## Claims

1. A heat resistant composition comprising:
(a) electrophilic functionalized high glass transition temperature copolymers having structural units of the formulae: 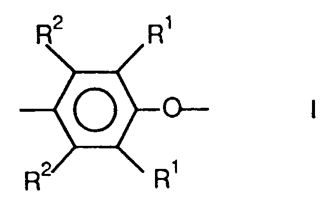 and 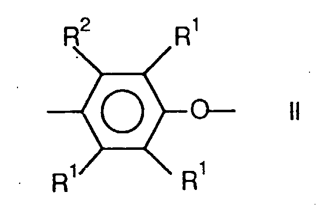 wherein each R¹ is independently a halogen, primary, secondary or tertiary alkyl, phenyl, haloalkyl, aminoalkyl, hydrocarbonoxy or halohydrocarbonoxy wherein at least two carbon atoms separate the halogen and oxygen atoms and each R² is independently a hydrogen, haloalkyl, hydrocarbonoxy or halohydrocarbonoxy as defined for R¹ ; and
(b) a polymer system selected from the group consisting of immiscible polymer blends, miscible polymer blends, copolymers and thermoplastic polymers.

2. A heat resistant composition in accordance with claim 1 wherein R¹ is a methyl group and R² is hydrogen.

3. A heat resistant composition in accordance with claim 1 wherein said electrophilic functionalized high glass transition temperature copolymers have end groups of the formulae 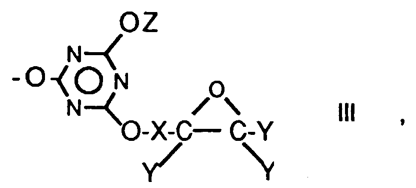 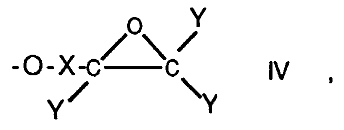 or 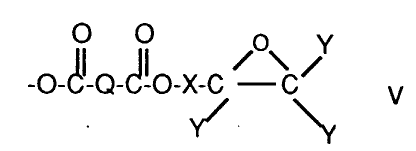 wherein X is a divalent aliphatic, alicyclic, heterocyclic or unsubstituted or substituted. aromatic hydrocarbon radical, alkylcycloaliphatic, alkylaryl, alkylcarbonyloxy or alkylarylcarbonoxy radical and each Y is independently a hydrogen, or alkyl group and Z is an alkyi, cycloalkyl, aromatic radical or 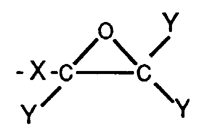 and Q is a divalent C₁₋₁₀ hydrocarbon, aliphatic or aromatic radical.

4. A heat resistant composition in accordance with claim 3 wherein X is 〉CH₂, Y is hydrogen and Q is an aryl radical.

5. A heat resistant composition in accordance with claim 1 wherein said electrophilic functionalized high glass transition temperature copolymer is graft functionalized and has structural units of the formula 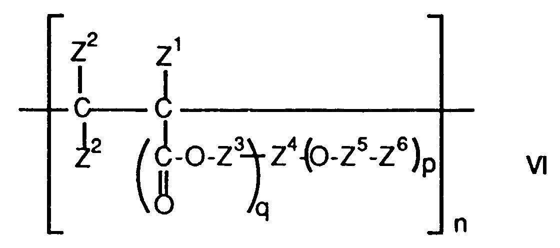 wherein:
Z¹ is a hydrogen or alkyl group;
Z² is a hydrogen, a C₁₋₅ alkyl group or a substantially inert substituent;
Z³ is a C₁₋₅ alkyl group,
Z⁴ is an epoxy group when q is 1 and
p is 0 or a carbonyl group or a C₁₋₅ alkyl group when q is 0 and p is 1;
Z⁵ is a C₁₋₅ alkyl group;
Z⁶ is an epoxy group and n is from about 1 to about 25;
p is 0 or 1; and
q is 0 or 1 with the proviso that p and q are not equal.

6. A heat resistant composition in accordance with claim 1 wherein said epoxy functionalized high glass transition temperature copolymers are random copolymers of formulae I and II and are about 80 to 20% by weight of the former to about 20 to 80% by weight of the latter.

7. A heat resistant composition in accordance with claim 1 wherein said polymer system comprises polyphenylene ether and polyesters.

8. A heat resistant composition in accordance with claim 7 wherein said polyesters are poly(ethylene terephthalates) or poly(butylene terephthalates).

9. A heat resistant composition in accordance with claim 1 wherein said polymer system comprises polyphenylene ether and polyamide.

10. A heat resistant composition in accordance with claim 1 wherein said electrophilic functionalized high glass transition temperature copolymers have a glass transition temperature of greater than about 170°C.

11. A heat resistant composition in accordance with claim 1 wherein said electrophilic functionalized high glass transition temperature copolymers have an average molecular weight of about 500 to about 100,000.

12. A heat resistant composition in accordance with claim 1 wherein said heat resistant composition is about 5 to about 75 weight percent electrophilic functionalized high glass transition temperature copolymer based on total weight of the heat resistant composition.

13. A heat resistant composition in accordance with claim 9 wherein said polyamide is Nylon 6/6.

14. A heat resistant composition in accordance with claim 9 wherein said polyamide is a Nylon compound comprising aromatic groups derived from terephthalates and isophthalates.

15. A heat resistant composition in accordance with any preceding claim wherein said plyphenylene ether is poly(2,6-dimethyl-1,4-phenylene)ether.

16. A heat resistant composition in accordance with claim 1 wherein said polymer system is a thermoplastic polymer.

17. A heat resistant composition in accordance with claim 16 wherein said thermoplastic polymer is a polyolefin, polyamide, polyester, unfunctionalized polyphenylene ether homopolymer, unfunctionalized polyphenylene ether copolymer or functionalized polyphenylene ether homopolymer.

18. A heat resistant composition in accordance with claim 1 wherein said electrophilic high glass transition temperature copolymers are orthoester functionalized and comprise groups of the formula 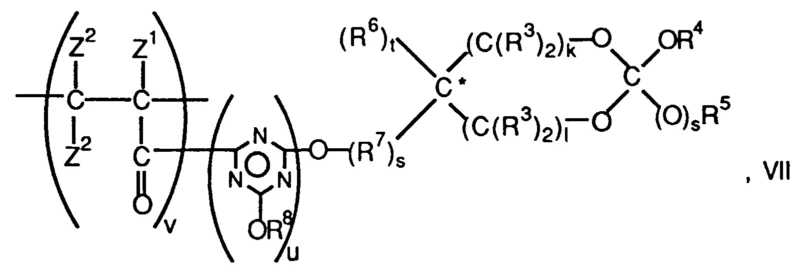 and
each R³ is independently a hydrogen, C₁₋₅ hydrocarbon, substituted or unsubstituted aromatic radical or a halogen;
R⁴ is a C₁₋₁₀ primary or secondary alkyl or aralkyl or a C₆₋₁₀ aromatic radical or an alkylene radical forming a second 4 to 8 membered ring with C* producing a bicyclo compound;
R⁵ is a C₁₋₁₀ primary or secondary alkyl or aralkyl or C₆₋₁₀ aromatic radical or R⁴ and R⁵ taken together with atoms connecting them can form a 4 to 8 membered ring thus producing a spirobicyclo compound;
R⁶ is a hydrogen, alkyl or aryl;
R⁷ is a C₁₋₆ alkylene radical; and
R⁸ is an alkyl, cycloalkyl or aromatic radical;
k is an integer from 0 to 2 and I is an integer from 0 to 1 and s is 0 or 1 and t is 0 when R⁴ and C* form a bicyclo compound and is otherwise 1 and u is 0 or 1 and v is 0 or 1 with the proviso that the copolymers are end group functionalized when u is 0 or 1 and v is 0, and the copolymers are graft functionalized when u is 0 and v is 1 to about 25 and u and v cannot simultaneously be greater than 0 and further with the proviso that s, k and I cannot simultaneously be 0.

19. A heat resistant composition in accordance with claim 1 wherein said electrophilic high glass transition temperature copolymers are alkyltriazine functionalized and comprise the formula 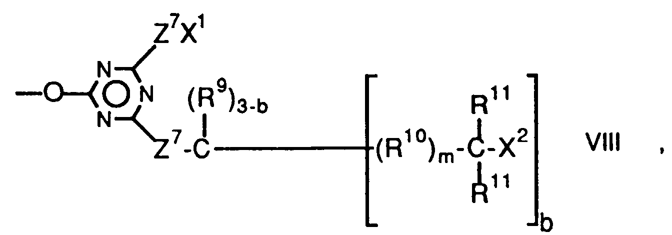 and X¹ is an alkyl, cycloalkyl, or aromatic radical or 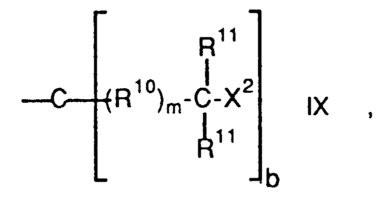
X² is a group displaceable by nucleophilic aliphatic substitution;
each Z⁷ is independently oxygen or sulfur;
R⁹ is hydrogen, C₁₋₄ primary or secondary alkyl or a non-hydrocarbon substituent substantially inert to displacement by nucleophilic moieties;
R¹⁰ is a C₁₋₃ alkylene radical which is unsubstituted or is substituted with moieties selected from the group consisting of C₁₋₄ primary or secondary alkyl radicals and non-hydrocarbon substituents as defined for R⁹;
each R¹¹ is independently R⁹ or X²;
m is 0 or 1; and
b is 1-3.

20. A heat resistant composition in accordance with claim 19 wherein X² is chlorine, bromine, iodine, alkylsulfonate, arylsulfonate, carboxylate, phosphate, phosphonate, phosphinate, thiophosphate, thiophosphonate, thiophosphinate or 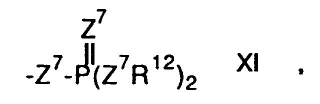 wherein each R¹² is independently a C₁₋₃₀ primary or secondary alkyl, cycloalkyl, aromatic or alkaryl radical or both of the R¹² radicals together with the atoms connecting them form a cyclic structure.
